# EUROPÄISCHE PATENTSCHRIFT

(11) **EP 3 609 755 B1**
(45) Veröffentlichungstag und Bekanntmachung des Hinweises auf die Patenterteilung: **23.07.2025**
(21) Anmeldenummer: 18709519.5
(22) Anmeldetag: 01.03.2018
(51) Int. Cl.: B60W 30/08, B60W 30/10, B60W 40/04, B60Q 1/52, G08G 1/00, G08G 1/16, B60W 30/18, B60W 50/00

(54) **FAHRERASSISTENZSYSTEM FÜR EIN FAHRZEUG**
DRIVER ASSISTANCE SYSTEM FOR A VEHICLE
SYSTÈME D'ASSISTANCE AU CONDUCTEUR POUR UN VÉHICULE

(30) Priorität: 12.04.2017 DE 102017206344
(43) Veröffentlichungstag der Anmeldung: 19.02.2020
(73) Patentinhaber: Robert Bosch GmbH, 70442 Stuttgart (DE)
(72) Erfinder: MIELENZ, Holger, 73760 Ostfildern (DE)
(86) Internationale Anmeldenummer: PCT/EP2018/055122
(87) Internationale Veröffentlichungsnummer: WO 2018/188846

(56) Entgegenhaltungen:
- DE-A1- 102015 205 133
- US-A1- 2008 162 027
- US-A1- 2009 326 751
- US-A1- 2013 304 365

## Beschreibung

Die Erfindung betrifft ein Fahrerassistenzsystem für ein Fahrzeug. Die Erfindung betrifft weiterhin ein Verfahren zur Steuerung eines Fahrzeugs.

### Stand der Technik

Fahrerassistenzsysteme für Fahrzeuge als solche sind bekannt. Üblicherweise umfassen bekannte Fahrerassistenzsysteme einen Abstandssensor zum Messen eines Abstands zwischen dem Fahrzeug und weiteren Fahrzeugen im Umfeld bzw. in der näheren Umgebung des Fahrzeugs. Abhängig von dem entsprechenden Abstand zwischen dem Fahrzeug und den weiteren Fahrzeugen wird beispielsweise ein Warnsignal an den Fahrer ausgegeben. Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisierten Fahren, wird eine große Zahl von Sensoren im Fahrzeug benötigt, die eine exakte Erfassung des Fahrzeugumfelds ermöglichen. So kann beispielsweise vorgesehen sein, dass das Fahrzeug autonom gebremst wird, um eine mögliche Kollision zu verhindern. Für automatisiert oder automatisch fahrende Fahrzeuge werden Sensoren und Verfahren zur Erfassung des Umfelds benötigt. Diese Umfelderfassung wird soweit durch geeignete Methoden etabliert, dass die Fahraufgabe durchgeführt werden kann.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, z.B. das hoch- und vollautomatisierte Fahren.

So ist beispielsweise aus der Druckschrift US2013304365 ein Verfahren zum Unterstützen eines Fahrzeugführers offenbart, welches erfasst, wann sich ein Host-Fahrzeug und ein erstes und ein zweites Umgebungsfahrzeug einer Kreuzung auf mindestens zwei verschiedenen Straßensegmenten nähern, wann das erste und das zweite Fahrzeug an der Kreuzung angehalten haben und wann das erste und das zweite Fahrzeug durch die Kreuzung fahren, sowie eine tatsächliche Reihenfolge des ersten und des zweiten Fahrzeugs durch die Kreuzung festlegt.

Ferner wird in der US2009326751 eine Fahrunterstützungsvorrichtung offenbart, die eine Fahrunterstützung auf der Grundlage einer Verkehrsregel eines mobilen Objekts durchführt,

Das Dokument US2008162027 bezieht sich auf ein Roboterantriebssystem und insbesondere auf ein Roboterantriebssystem, das in der Lage ist, ein Fahrzeug in Übereinstimmung mit Verkehrsregeln zu steuern.

Ferner ist aus der DE 102011076763 A1 ein Verfahren zur Ermittlung der für einen Straßenabschnitt geltenden Verkehrszeichen bekannt. Die Erfindung offenbart insbesondere, dass ein Abbild einer realen bzw. aktuellen Situation, also das Fahrzeugumfeld und der dazu relativen Fahrzeugposition, mit einer ontologischen Datenstruktur derart verknüpft wird, und dass Verkehrsregeln implementiert werden können. Da in der ontologischen Datenstruktur ferner Verkehrsregeln implementiert sind, steht in vorteilhafter Weise Wissen zur Verfügung, um beispielsweise die aktuelle Situation in Bezug auf zulässige und nicht zulässige Fahrzeugmanöver besser einschätzen zu können. So erkennt das Fahrerassistenzsystem beispielsweise, dass das Fahrzeug einem weiteren Fahrzeug die Vorfahrt gewähren muss. Eine pure Erkennung, also eine reine Erfassung und Darstellung von Verkehrszeichen reicht jedoch häufig nicht aus, da die Zeichen oft redundant aufgestellt oder für verschiedene Fahrsituationen beachtet werden müssen. So ist beispielsweise eine Stausituation mit einer einhergehenden kooperativen Fahrweise schwierig umzusetzen.

Es ist daher eine Aufgabe der vorliegenden Erfindung, ein verbessertes Fahrerassistenzsystem für ein Fahrzeug, insbesondere eines höher automatisierten Fahrzeugs (HAF) und ein verbessertes Verfahren zum Betreiben eines höher automatisierten Fahrzeugs (HAF) bereitzustellen, das sowohl eine frühzeitige Erfassung einer eventuellen Streckenänderung bzw. eines Streckenfehlers als auch eine entsprechende Reaktion auf diese ermöglicht.

### Offenbarung der Erfindung

Diese Aufgabe wird erfindungsgemäß durch ein Fahrerassistenzsystem für ein Fahrzeug, insbesondere ein höher automatisiertes Fahrzeugs (HAF) mit den Merkmalen des Anspruchs 1 sowie durch ein Verfahren zur Steuerung eines Fahrzeugs mit den Merkmalen des Anspruchs 10 gelöst. Vorteilhafte Ausgestaltungen, Varianten und Weiterbildungen der Erfindung sind den Unteransprüche zu entnehmen.

Ein erfindungsgemäßes Fahrerassistenzsystem für ein Fahrzeug, insbesondere ein höher automatisiertes Fahrzeugs (HAF), umfasst eine Erfassungseinrichtung zum Erfassen von Informationen in einem Fahrzeugumfeld. Ferner umfasst das Fahrerassistenzsystem eine Positionsbestimmungseinrichtung zum Bestimmen einer Fahrzeugposition relativ zu dem Fahrzeugumfeld sowie eine Datenbank, wobei die Datenbank eine digitale Straßenkarte umfasst, und eine Steuereinheit, wobei die Steuereinheit dazu eingerichtet ist, die Fahrzeugposition in der digitalen Karte zu lokalisieren und an der Fahrzeugposition geltende Verkehrsregeln zu ermitteln. Dabei ist die Ermittlung der geltenden Verkehrsregeln zumindest teilweise unter Verwendung von durch die Erfassungseinrichtung erfassten ersten Informationen und/oder unter Verwendung von in der Datenbank hinterlegten Karteninformationen erfolgt. Die Steuereinheit ist weiterhin dazu eingerichtet, von der Erfassungseinrichtung erfasste zweite Informationen dahingehend auszuwerten, ob die an der Fahrzeugposition maßgeblichen Verkehrsregeln von anderen Verkehrsteilnehmern eingehalten werden oder ob die anderen Verkehrsteilnehmer anstelle der maßgeblichen Verkehrsregeln alternative Verkehrsregeln befolgen. Dabei ist die Steuereinrichtung dazu eingerichtet, eine Fahrtrajektorie unter Berücksichtigung der alternativen Verkehrsregeln zu entwerfen und das Fahrzeug entlang dieser Fahrtrajektorie zu steuern. Weiterhin ist die Steuereinrichtung dazu eingerichtet, basierend auf den alternativen Verkehrsregeln zumindest einem anderen Verkehrsteilnehmer Vorfahrt zu gewähren, wobei die Steuereinrichtung dazu eingerichtet ist, anhand der zweiten Informationen eine Durchflussrate zu bestimmen, wobei die Durchflussrate eine Anzahl an Fahrzeugen wiedergibt, welche die Fahrzeugposition auf einer Fahrspur passieren, und wobei die Steuereinrichtung dazu eingerichtet ist, dem zumindest einen anderen Verkehrsteilnehmer zumindest teilweise auf Basis der Durchflussrate Vorfahrt zu gewähren.

In einer besonders bevorzugten Ausführungsform handelt es sich bei den maßgeblichen Verkehrsregeln und bei den alternativen Verkehrsregeln jeweils um Vorfahrtsbeziehungen zwischen den Verkehrsteilnehmern, wobei die Vorfahrtsbeziehung zweier Verkehrsteilnehmer wiedergibt, welcher der beiden Verkehrsteilnehmer dem anderen gegenüber vorfahrtsberechtigt ist.

Vorteilhafterweise ist die Steuereinrichtung dazu eingerichtet, die Auswertung, ob die an der Fahrzeugposition maßgeblichen Verkehrsregeln von den anderen Verkehrsteilnehmern eingehalten werden oder ob die anderen Verkehrsteilnehmer anstelle der maßgeblichen Verkehrsregeln alternative Verkehrsregeln befolgen, dadurch durchzuführen, dass sie Soll-Vorfahrtsbeziehungen der Verkehrsteilnehmer untereinander unter Berücksichtigung der maßgeblichen Verkehrsregeln ermittelt und mit tatsächlichen, durch die Erfassungseinrichtung erfassten Ist-Vorfahrtsbeziehungen der Verkehrsteilnehmer untereinander vergleicht.

In einer vorteilhaften Ausgestaltung ist die Steuereinrichtung dazu eingerichtet, in einem Speicher der Steuereinrichtung hinterlegte, vordefinierte alternative Verkehrsregeln zu identifizieren, wobei es sich bei den vordefinierten alternativen Verkehrsregeln insbesondere um Vorfahrtsbeziehungen handelt, bei denen sich die Verkehrsteilnehmer jeweils im Wechsel das Vorfahrtsrecht geben, besonders bevorzugterweise um sogenannte Reißverschlussverfahren.

Bevorzugterweise ist die Steuereinrichtung dazu eingerichtet, die alternativen Verkehrsregeln anhand von regelmäßig auftretenden Abweichungen zwischen den Soll-Vorfahrtsbeziehungen und den Ist-Vorfahrtsbeziehungen zu identifizieren.

Vorzugsweise ist die Steuereinrichtung dazu eingerichtet, die Fahrtrajektorie basierend auf den alternativen Verkehrsregeln so zu entwickeln, als ob das Fahrzeug gegenüber einem anderen Fahrzeug vorfahrtsberechtigt wäre, obwohl das andere Fahrzeug den maßgeblichen Verkehrsregeln zufolge vorfahrtsberechtigt ist.

Dabei ist bevorzugterweise die Steuereinrichtung dazu eingerichtet, vor und während des Steuerns entlang der Fahrtrajektorie sicherzustellen, dass das andere Fahrzeug sich konform der dem Entwurf der Fahrtrajektorie zugrundegelegten alternativen Verkehrsregeln verhält, insbesondere dadurch, dass die Steuereinrichtung durch die Erfassungseinrichtung bereitgestellte zweite Informationen überwacht.

Erfindungsgemäß ist vorgesehen, dass die ersten Informationen in Form einer optischen Detektion von Verkehrszeichen, Fahrbahnmarkierungen und/oder Lichtzeichenanlagen erfasst werden.

Ferner erweist es sich als Vorteil, dass die zweiten Informationen in Form von Radar- oder Bild- oder Lidaraufnahmen oder C2X-Informationen der anderen Verkehrsteilnehmer erfasst.

Einen weiteren Gegenstand der vorliegenden Erfindung bildet ein Verfahren zur Steuerung eines Fahrzeugs, insbesondere einer höher automatisierten Fahrzeugs (HAF), wobei das Verfahren in einem ersten Schritt Informationen in einem Fahrzeugumfeld erfasst. In einem weiteren Schritt wird eine Fahrzeugposition relativ zu dem Fahrzeugumfeld bestimmt und anschließend in einer Datenbank bereitgestellt, wobei die Datenbank eine digitale Straßenkarte umfasst. Die Fahrzeugposition wird in der digitalen Karte lokalisiert und an der Fahrzeugposition geltenden Verkehrsregeln ermittelt, wobei die Ermittlung der geltenden Verkehrsregeln zumindest teilweise unter Verwendung von ersten Informationen des Fahrzeugumfelds und/oder unter Verwendung von in der Datenbank hinterlegten Karteninformationen erfolgt.

Zweite Informationen werden dahingehend ausgewertet werden, ob die an der Fahrzeugposition maßgeblichen Verkehrsregeln von anderen Verkehrsteilnehmern eingehalten werden oder ob die anderen Verkehrsteilnehmer anstelle der maßgeblichen Verkehrsregeln alternative Verkehrsregeln befolgen.

Es handelt sich bei den maßgeblichen Verkehrsregeln und bei den alternativen Verkehrsregeln jeweils um Vorfahrtsbeziehungen zwischen den Verkehrsteilnehmern, wobei die Vorfahrtsbeziehung zweier Verkehrsteilnehmer wiedergibt, welcher der beiden Verkehrsteilnehmer dem anderen gegenüber vorfahrtsberechtigt ist, wobei basierend auf den alternativen Verkehrsregeln sowie zumindest teilweise auf Basis einer anhand der zweiten Informationen bestimmten Durchflussrate zumindest einem anderen Verkehrsteilnehmer Vorfahrt gewährt wird, wobei die Durchflussrate eine Anzahl an Fahrzeugen wiedergibt, welche die Fahrzeugposition auf einer Fahrspur passieren.

Dabei ist es von Vorteil, dass die Auswertung, ob die an der Fahrzeugposition maßgeblichen Verkehrsregeln von den anderen Verkehrsteilnehmern eingehalten werden oder ob die anderen Verkehrsteilnehmer anstelle der maßgeblichen Verkehrsregeln alternative Verkehrsregeln befolgen, dadurch erfolgt, dass Soll-Vorfahrtsbeziehungen der Verkehrsteilnehmer untereinander unter Berücksichtigung der maßgeblichen Verkehrsregeln ermittelt und mit tatsächlichen, durch die Erfassungseinrichtung erfassten Ist-Vorfahrtsbeziehungen der Verkehrsteilnehmer untereinander verglichen werden.

Vorteilhafterweise wird eine Fahrtrajektorie des Fahrzeugs unter Berücksichtigung der alternativen Verkehrsregeln entworfen und das Fahrzeug entlang dieser Fahrtrajektorie gesteuert.

Ein Kerngedanke der vorliegenden Erfindung liegt insbesondere darin, eine Informationsbasis zu schaffen, die ein Verhalten von anderen Verkehrsteilnehmern berücksichtigt und dadurch zu einer verbesserten Qualität einer digitalen Karte beiträgt. Dabei werden Szenenelemente genutzt und Verhaltensmuster zum aktuellen oder und/oder zu anderen Zeitpunkten durch das eigene und/andere Fahrzeuge genutzt. Vorgeschlagen wird, die Ablage und Aggregation von Verhaltensmustern von Fahrzeugen und/oder die Interpretation von deren Verhalten in der Interaktion mit der Infrastruktur bereitzustellen. Diese Kernaspekte werden im Folgenden näher beschrieben.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken. Die Figuren sind vor allem dazu gedacht, die erfindungswesentlichen Prinzipien zu verdeutlichen und sind nicht unbedingt maßstabgetreu ausgeführt.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:

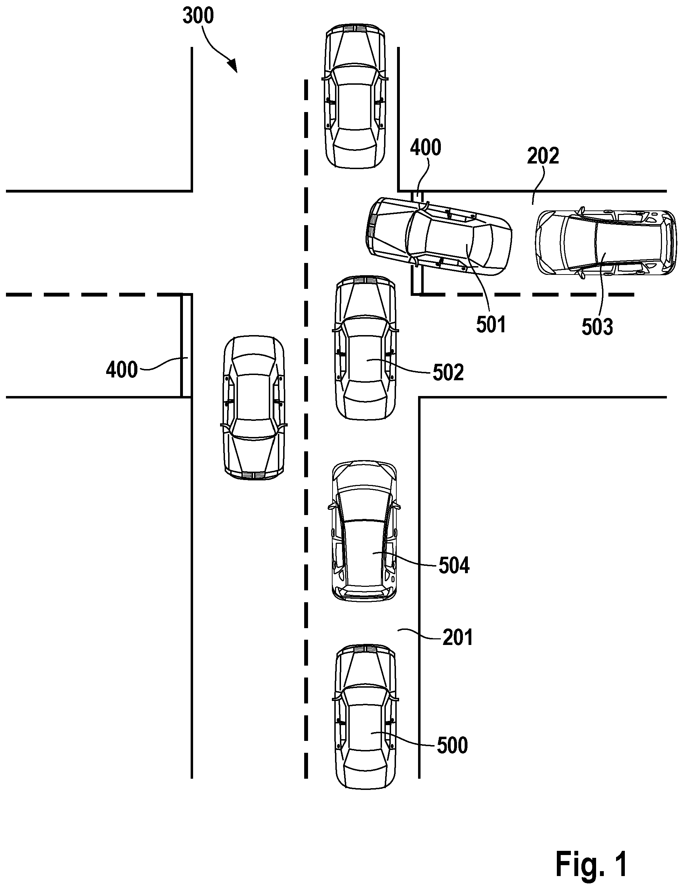

- Fig. 1: eine prinzipielle Darstellung einer Funktionsweise des erfindungsgemäßen Verfahrens.

Die Figur 1 stellt ein Beispiel eines Verkehrsknotenpunktes 300 dar, an welchem Fahrzeuge, insbesondere höher automatisierten Fahrzeugs (HAF)aus zwei Richtungen aufeinandertreffen. Das Fahrzeug 500, insbesondere ein höher automatisiertes Fahrzeug (HAF), bei dem das erfindungsgemäße Fahrerassistenzsystem zum Einsatz kommt, ist in der Figur mit "EGO" gekennzeichnet. Das EGO-Fahrzeug 500 fährt in einem Fahrzeugumfeld entlang einer ersten Fahrspur 201, auf der sich außerdem auch eine Vielzahl dicht auffahrender und mit reduzierter Geschwindigkeit fahrender anderer Fahrzeuge bewegen.

Der Knotenpunkt 300 ist in der Figur 1 als Kreuzung dargestellt. Eine weitere Kategorie Knotenpunkt, auf welche die folgenden Ausführungen analog übertragen werden können, stellen beispielsweise die Kreisverkehre dar.

Das Fahrerassistenzsystem 101 des EGO-Fahrzeugs umfasst eine Positionsbestimmungseinrichtung 105 zum Bestimmen einer Fahrzeugposition relativ zu dem Fahrzeugumfeld. Hierbei kann es sich insbesondere um ein bekanntes GPS-System handeln.

Das Fahrerassistenzsystem 101 weist eine Datenbank mit einer digitalen Straßenkarte auf, wobei eine Steuerung des Fahrerassistenzsystems dazu eingerichtet ist, die Fahrzeugposition des EGO-Fahrzeugs in der digitalen Karte zu lokalisieren. Die Datenbank kann sich in einem im EGO-Fahrzeug untergebrachten Speicher befinden oder in einem entfernten Server, der durch eine geeignete Software in das Fahrerassistenzsystem eingebunden ist ("Cloud"-Lösung).

Ferner umfasst das Fahrerassistenzsystem 101 des EGO-Fahrzeugs eine Erfassungseinrichtung 103 zum Erfassen von Informationen in dem Fahrzeugumfeld, wobei die Informationen erste Informationen einschließen, die der Ermittlung maßgeblicher Verkehrsregeln dienen. Diese ersten Informationen können beispielsweise durch optische Detektion von Verkehrszeichen, Fahrbahnmarkierungen 400 und/oder Lichtzeichenanlagen gewonnen werden.

Eine maßgebliche Verkehrsregel ist in dem in Figur 1 dargestellten Fall, dass die entlang der ersten Fahrbahn 201 fahrenden Fahrzeuge gegenüber den entlang der zweiten Fahrbahn fahrenden Fahrzeugen vorfahrtsberechtigt sind. Es handelt sich also bei den maßgeblichen Verkehrsregeln um eine Vorfahrtsbeziehung zwischen den Fahrzeugen.

Alternativ oder ergänzend zu der Ermittlung der maßgeblichen Verkehrsregeln anhand der ersten Informationen kann es vorgesehen sein, dass die Steuereinrichtung des Fahrerassistenzsystems die maßgeblichen Verkehrsregeln anhand von in der Datenbank gespeicherten Informationen ermittelt.

Die Steuereinrichtung des Fahrerassistenzsystems ist erfindungsgemäß dazu eingerichtet, von der Erfassungseinrichtung erfasste zweite Informationen zu empfangen und auszuwerten. Die zweiten Informationen können insbesondere in Form von Radar- oder Bildaufnahmen der anderen Verkehrsteilnehmer vorliegen. Geeignete Erfassungseinrichtungen können zu diesem Zweck an sich bekannte Radar-, Lidar- oder Bildsensoren, insbesondere Kameras einschließen, mit jeweils geeigneten softwarebasierten Auswertealgorithmen.

Die Steuereinrichtung ist dazu weiterhin dazu eingerichtet, die zweiten Informationen dahingehend auszuwerten, ob die an der Fahrzeugposition maßgeblichen Verkehrsregeln von anderen Verkehrsteilnehmern eingehalten werden oder ob die anderen Verkehrsteilnehmer anstelle der maßgeblichen Verkehrsregeln alternative Verkehrsregeln befolgen.

Aufgrund einer hohen Verkehrsdichte am Verkehrsknotenpunkt 300, einem Stau, oder einem Unfall, um nur zwei Beispiele zu nennen, kann es nämlich zu der Situation kommen, dass sich die von den Verkehrsteilnehmern tatsächlich akzeptierte und durchgeführte Vorfahrtsregelung an dem Verkehrsknotenpunkt 300 unter Anwendung einer kooperativen Fahrweise entgegen der maßgeblichen Verkehrsregel dahingehend geändert hat, eine Art Reißverschlussverfahren umgesetzt wird, bei dem sich die Verkehrsteilnehmer jeweils im Wechsel das Vorfahrtsrecht geben bzw. abtreten. Im Sinne der Erfindung wird eine solche von der der maßgeblichen Verkehrsregeln abweichende, von den beteiligten Verkehrsteilnehmern jedoch akzeptierte Verkehrsregel als alternative Verkehrsregel bezeichnet.

Die Feststellung, dass alternative Verkehrsregeln befolgt werden, kann vorzugsweise dadurch erfolgen, dass die Steuereinheit die Soll-Vorfahrtsbeziehungen der Verkehrsteilnehmer untereinander unter Berücksichtigung der maßgeblichen Verkehrsregeln ermittelt und mit tatsächlichen, durch die Erfassungseinrichtung erfassten Ist-Vorfahrtsbeziehungen der Verkehrsteilnehmer untereinander vergleicht.

Im Beispiel der Figur 1 ergäbe beispielsweise die Auswertung der zweiten Informationen, dass das Fahrzeug 501 von der Fahrbahn 202 auf die Fahrbahn 201 einfährt, obwohl das vorfahrtsberechtigte Fahrzeug 502 noch zuvor den Knotenpunkt 300 hätte durchfahren können. Insbesondere ist es in einer vorteilhaften Ausführungsform der Erfindung vorgesehen, dass die alternativen Verkehrsregeln anhand von regelmäßig auftretenden Abweichungen zwischen den Soll-Vorfahrtsbeziehungen und den Ist-Vorfahrtsbeziehungen identifiziert werden. Eine solche Regemäßigkeit könnte unter Bezugnahme auf Figur 1 beispielsweise steuerungsseitig konstatiert werden, wenn die Auswertung der zweiten Information ergibt, dass die Reihenfolge der den Knotenpunkt 300 in Richtung der Fahrbahn 201 durchfahrenden Fahrzeuge gemäß Fahrzeug 501 vor Fahrzeug 502 vor Fahrzeug 503 vor Fahrzeug 504 angegeben werden kann. In diesem Fall könnte deine Steuereinrichtung eines Fahrerassistenzsystems eines EGO-Fahrzeugs 500 durch Auswertung der zweiten Informationen feststellen, dass die seitens der anderen Verkehrsteilnehmer akzeptierten alternativen Verkehrsregeln mit hoher Wahrscheinlichkeit eine Reißverschlussregelung am Verkehrsknotenpunkt 300 beinhalten.

Damit das Fahrerassistenzsystem solche alternativen Verkehrsregeln leichter bzw. schneller identifizieren kann, ist es in einer bevorzugten Ausführungsform der Erfindung vorgesehen, dass die Steuereinrichtung dazu eingerichtet ist, in seinem Fahrzeugumfeld bestimmte, in einem Speicher der Steuereinrichtung hinterlegte, vordefinierte alternative Verkehrsregeln der anderen Verkehrsteilnehmer zu identifizieren.

Bei diesen alternativen Verkehrsregeln kann es sich beispielsweise um die vorgenannten Reißverschlussverfahren handeln, es ist aber auch denkbar, dass es sich hierbei um ein durch einen Unfall bedingtes Ausweichen der dem EGO-Fahrzeug 500 vorausfahrenden Fahrzeuge 501, 502, 503, 504 auf eine Gegenfahrbahn handelt, wobei die auf der Gegenfahrbahn befindlichen Fahrzeuge wiederum in kooperativer Fahrweise stehen bleiben und die nach maßgeblicher Verkehrsregel ihnen zustehende Vorfahrt an den Gegenverkehr abtreten.

Die Steuereinrichtung des Fahrerassistenzsystems ist in einer Ausführungsform der Erfindung dazu eingerichtet, eine Fahrtrajektorie unter Berücksichtigung der alternativen Verkehrsregeln zu entwerfen und das EGO-Fahrzeug 500 entlang dieser Fahrtrajektorie zu steuern.

Dabei kann es vorkommen, dass das Fahrerassistenzsystem basierend auf den alternativen Verkehrsregeln zumindest einem anderen Verkehrsteilnehmer Vorfahrt gewährt, der den maßgeblichen Verkehrsregeln zufolge gegenüber dem EGO-Fahrzeug 500 nicht vorfahrtsberechtigt ist.

Hierbei ist die Steuereinrichtung dazu eingerichtet, anhand der zweiten Informationen eine Durchflussrate zu bestimmen, wobei die Durchflussrate eine Anzahl an Fahrzeugen 501, 502, 503, 504 wiedergibt, welche die Fahrzeugposition auf einer Fahrspur 201, 202 passieren. Auf Basis dieser Durchflussrate kann es beispielsweise angemessen sein, zwei auf Grundlage der maßgeblichen Verkehrsregeln nicht vorfahrtsberechigten Fahrzeugen 501 Vorfahrt zu gewähren.

In ähnlicher Weise ist die Steuereinrichtung bevorzugterweise dazu eingerichtet, die Fahrtrajektorie basierend auf den alternativen Verkehrsregeln so zu entwickeln, als ob das EGO-Fahrzeug 500 gegenüber einem anderen Fahrzeug 501, 502, 503, 504 vorfahrtsberechtigt wäre, obwohl das andere Fahrzeug 501, 502, 503, 504 den maßgeblichen Verkehrsregeln zufolge vorfahrtsberechtigt ist.

In diesem Fall ist die Steuereinrichtung bevorzugterweise und aus Sicherheitsgründen dazu eingerichtet, vor und während des Steuerns entlang der Fahrtrajektorie sicherzustellen, dass das andere Fahrzeug sich konform der dem Entwurf der Fahrtrajektorie zugrundegelegten alternativen Verkehrsregeln verhält, insbesondere dadurch, dass die Steuereinrichtung durch die Erfassungseinrichtung bereitgestellte zweite Informationen überwacht.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

Neben den beschriebenen und abgebildeten Ausführungsformen sind weitere Ausführungsformen vorstellbar, welche weitere Abwandlungen sowie Kombinationen von Merkmalen umfassen können.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

## Patentansprüche

1. Fahrerassistenzsystem für ein Fahrzeug (500), insbesondere ein höher automatisiertes Fahrzeug (HAF), umfassend:
eine Erfassungseinrichtung zum Erfassen von Informationen in einem Fahrzeugumfeld;
eine Positionsbestimmungseinrichtung zum Bestimmen einer Fahrzeugposition relativ zu dem Fahrzeugumfeld,
eine Datenbank, wobei die Datenbank eine digitale Straßenkarte umfasst,
eine Steuereinheit, wobei die Steuereinheit dazu eingerichtet ist, die Fahrzeugposition in der digitalen Karte zu lokalisieren und an der Fahrzeugposition geltende Verkehrsregeln zu ermitteln, wobei die Ermittlung der geltenden Verkehrsregeln zumindest teilweise unter Verwendung von durch die Erfassungseinrichtung erfassten ersten Informationen und/oder unter Verwendung von in der Datenbank hinterlegten Karteninformationen erfolgt; wobei
die Steuereinheit weiterhin dazu eingerichtet ist, von der Erfassungseinrichtung erfasste zweite Informationen dahingehend auszuwerten, ob die an der Fahrzeugposition maßgeblichen Verkehrsregeln von anderen Verkehrsteilnehmern eingehalten werden oder ob die anderen Verkehrsteilnehmer anstelle der maßgeblichen Verkehrsregeln alternative Verkehrsregeln befolgen; und wobei
die Steuereinrichtung dazu eingerichtet ist, eine Fahrtrajektorie unter Berücksichtigung der alternativen Verkehrsregeln zu entwerfen und das Fahrzeug (500) entlang dieser Fahrtrajektorie zu steuern
**dadurch gekennzeichnet, dass**
die Steuereinrichtung dazu eingerichtet ist, basierend auf den alternativen Verkehrsregeln zumindest einem anderen Verkehrsteilnehmer Vorfahrt zu gewähren, wobei die Steuereinrichtung dazu eingerichtet ist, anhand der zweiten Informationen eine Durchflussrate zu bestimmen, wobei die Durchflussrate eine Anzahl an Fahrzeugen (501, 502, 503, 504) wiedergibt, welche die Fahrzeugposition auf einer Fahrspur (201, 202) passieren, und wobei die Steuereinrichtung dazu eingerichtet ist, dem zumindest einen anderen Verkehrsteilnehmer zumindest teilweise auf Basis der Durchflussrate Vorfahrt zu gewähren.

2. Fahrerassistenzsystem nach Anspruch 1, **dadurch gekennzeichnet, dass** es sich bei den maßgeblichen Verkehrsregeln und bei den alternativen Verkehrsregeln jeweils um Vorfahrtsbeziehungen zwischen den Verkehrsteilnehmern handelt, wobei die Vorfahrtsbeziehung zweier Verkehrsteilnehmer wiedergibt, welcher der beiden Verkehrsteilnehmer dem anderen gegenüber vorfahrtsberechtigt ist.

3. Fahrerassistenzsystem nach Anspruch 2, **dadurch gekennzeichnet, dass** die Steuereinrichtung dazu eingerichtet ist, die Auswertung, ob die an der Fahrzeugposition maßgeblichen Verkehrsregeln von den anderen Verkehrsteilnehmern eingehalten werden oder ob die anderen Verkehrsteilnehmer anstelle der maßgeblichen Verkehrsregeln alternative Verkehrsregeln befolgen, dadurch durchzuführen, dass sie Soll-Vorfahrtsbeziehungen der Verkehrsteilnehmer untereinander unter Berücksichtigung der maßgeblichen Verkehrsregeln ermittelt und mit tatsächlichen, durch die Erfassungseinrichtung erfassten Ist-Vorfahrtsbeziehungen der Verkehrsteilnehmer untereinander vergleicht.

4. Fahrerassistenzsystem nach Anspruch 3, **dadurch gekennzeichnet, dass** die Steuereinrichtung dazu eingerichtet ist, in einem Speicher der Steuereinrichtung hinterlegte, vordefinierte alternative Verkehrsregeln zu identifizieren, wobei es sich bei den vordefinierten alternativen Verkehrsregeln insbesondere um Vorfahrtsbeziehungen handelt, bei denen sich die Verkehrsteilnehmer jeweils im Wechsel das Vorfahrtsrecht geben, besonders bevorzugterweise um sogenannte Reissverschlussverfahren.

5. Fahrerassistenzsystem nach Anspruch 4, **dadurch gekennzeichnet, dass** die Steuereinrichtung dazu eingerichtet ist, die alternativen Verkehrsregeln anhand von regelmäßig auftretenden Abweichungen zwischen den Soll-Vorfahrtsbeziehungen und den Ist-Vorfahrtsbeziehungen zu identifizieren.

6. Fahrerassistenzsystem nach einem der vorstehenden Ansprüche, **dadurch gekennzeichnet, dass** die Steuereinrichtung dazu eingerichtet ist, die Fahrtrajektorie basierend auf den alternativen Verkehrsregeln so zu entwickeln, als ob das Fahrzeug (500) gegenüber einem anderen Fahrzeug (501, 502, 503, 504) vorfahrtsberechtigt wäre, obwohl das andere Fahrzeug (501, 502, 503, 504) den maßgeblichen Verkehrsregeln zufolge vorfahrtsberechtigt ist.

7. Fahrerassistenzsystem nach einem der Ansprüche 6 bis 7, **dadurch gekennzeichnet, dass** die Steuereinrichtung dazu eingerichtet ist, vor und während des Steuerns entlang der Fahrtrajektorie sicherzustellen, dass das andere Fahrzeug (501, 502, 503, 504) sich konform der dem Entwurf der Fahrtrajektorie zugrunde gelegten alternativen Verkehrsregeln verhält, insbesondere dadurch, dass die Steuereinrichtung durch die Erfassungseinrichtung bereitgestellte zweite Informationen überwacht.

8. Fahrerassistenzsystem nach einem der vorstehenden Ansprüche, **dadurch gekennzeichnet, dass** die ersten Informationen in Form einer optischen Detektion von Verkehrszeichen, Fahrbahnmarkierungen und/oder Lichtzeichenanlagen erfasst werden.

9. Fahrerassistenzsystem nach einem der vorstehenden Ansprüche, **dadurch gekennzeichnet, dass** die zweiten Informationen in Form von Radar- oder Bildaufnahmen der anderen Verkehrsteilnehmer erfasst werden.

10. Verfahren zur Steuerung eines Fahrzeugs, insbesondere eines höher automatisierten Fahrzeugs (HAF), umfassend die Schritte:
• Erfassen von Informationen in einem Fahrzeugumfeld;
• Bestimmen einer Fahrzeugposition relativ zu dem Fahrzeugumfeld;
• Bereitstellen einer Datenbank, wobei die Datenbank eine digitale Straßenkarte umfasst; und
• Lokalisierung der Fahrzeugposition in der digitalen Karte und Ermittlung von an der Fahrzeugposition geltenden Verkehrsregeln, wobei die Ermittlung der geltenden Verkehrsregeln zumindest teilweise unter Verwendung von ersten Informationen des Fahrzeugumfelds und/oder unter Verwendung von in der Datenbank hinterlegten Karteninformationen erfolgt,
wobei
zweite Informationen dahingehend ausgewertet werden, ob die an der Fahrzeugposition maßgeblichen Verkehrsregeln von anderen Verkehrsteilnehmern eingehalten werden oder ob die anderen Verkehrsteilnehmer anstelle der maßgeblichen Verkehrsregeln alternative Verkehrsregeln befolgen;
wobei es sich bei den maßgeblichen Verkehrsregeln und bei den alternativen Verkehrsregeln jeweils um Vorfahrtsbeziehungen zwischen den Verkehrsteilnehmern handelt, wobei die Vorfahrtsbeziehung zweier Verkehrsteilnehmer wiedergibt, welcher der beiden Verkehrsteilnehmer dem anderen gegenüber vorfahrtsberechtigt ist,
**gekennzeichnet durch** den Schritt,
basierend auf den alternativen Verkehrsregeln sowie zumindest teilweise auf Basis einer anhand der zweiten Informationen bestimmten Durchflussrate zumindest einem anderen Verkehrsteilnehmer Vorfahrt zu gewähren, wobei die Durchflussrate eine Anzahl an Fahrzeugen (501, 502, 503, 504) wiedergibt, welche die Fahrzeugposition auf einer Fahrspur (201, 202) passieren.

11. Verfahren nach Anspruch 10, **dadurch gekennzeichnet, dass** die Auswertung, ob die an der Fahrzeugposition maßgeblichen Verkehrsregeln von den anderen Verkehrsteilnehmern eingehalten werden oder ob die anderen Verkehrsteilnehmer anstelle der maßgeblichen Verkehrsregeln alternative Verkehrsregeln befolgen, dadurch erfolgt, dass Soll-Vorfahrtsbeziehungen der Verkehrsteilnehmer untereinander unter Berücksichtigung der maßgeblichen Verkehrsregeln ermittelt und mit tatsächlichen, durch die Erfassungseinrichtung erfassten Ist-Vorfahrtsbeziehungen der Verkehrsteilnehmer untereinander verglichen werden.

12. Verfahren nach einem der Ansprüche 10 bis 11, **dadurch gekennzeichnet, dass** eine Fahrtrajektorie des Fahrzeugs unter Berücksichtigung der alternativen Verkehrsregeln entworfen und das Fahrzeug entlang dieser Fahrtrajektorie gesteuert wird.

## Claims

1. Driver assistance system for a vehicle (500), in particular a higher-level automated vehicle (HAV), comprising:
a capture device for recording information in a vehicle environment;
a position determination device for determining a vehicle position relative to the vehicle environment;
a database, the database comprising a digital road map;
a control unit, the control unit being configured to locate the vehicle position on the digital map and ascertain traffic rules applicable to the vehicle position, the applicable traffic rules being ascertained at least sometimes using first information recorded by the capture device and/or using map information stored in the database; wherein
the control unit is furthermore configured to evaluate second information recorded by the capture device in order to ascertain whether the traffic rules relevant to the vehicle position are being complied with by other road users or whether the other road users are following alternative traffic rules instead of the relevant traffic rules; and wherein
the control device is configured to design a travel trajectory in consideration of the alternative traffic rules and to steer the vehicle (500) along this travel trajectory,
**characterized in that**
the control device is configured to take the alternative traffic rules as a basis for granting right of way to at least one other road user, the control device being configured to use the second information to determine a flow rate, the flow rate representing a number of vehicles (501, 502, 503, 504) passing the vehicle position in a lane (201, 202), and the control device being configured to grant right of way to the at least one other road user at least sometimes on the basis of the flow rate.

2. Driver assistance system according to Claim 1, **characterized in that** the relevant traffic rules and the alternative traffic rules are in each case right-of-way relationships between the road users, the right-of-way relationship between two road users representing which of the two road users has right of way over the other.

3. Driver assistance system according to Claim 2, **characterized in that** the control device is configured to carry out the evaluation as to whether the traffic rules relevant to the vehicle position are being complied with by the other road users, or whether the other road users are following alternative traffic rules instead of the relevant traffic rules, by ascertaining target right-of-way relationships between the road users in consideration of the relevant traffic rules and comparing said relationships with de facto actual right-of-way relationships, recorded by the capture device, between the road users.

4. Driver assistance system according to Claim 3, **characterized in that** the control device is configured to identify predefined alternative traffic rules stored in a memory of the control device, the predefined alternative traffic rules being in particular right-of-way relationships in which each of the road users in turn gives way, particularly preferably so-called zipper methods.

5. Driver assistance system according to Claim 4, **characterized in that** the control device is configured to identify the alternative traffic rules on the basis of regularly occurring variances between the target right-of-way relationships and the actual right-of-way relationships.

6. Driver assistance system according to one of the preceding claims, **characterized in that** the control device is configured to develop the travel trajectory on the basis of the alternative traffic rules as if the vehicle (500) had right of way over another vehicle (501, 502, 503, 504), even though the other vehicle (501, 502, 503, 504) has right of way according to the relevant traffic rules.

7. Driver assistance system according to either of Claims 6 to 7, **characterized in that** the control device is configured so as, before and during steering along the travel trajectory, to ensure that the other vehicle (501, 502, 503, 504) adheres to the alternative traffic rules on which the design of the travel trajectory is based, in particular by virtue of the control device monitoring the second information provided by the capture device.

8. Driver assistance system according to one of the preceding claims, **characterized in that** the first information is recorded in the form of an optical detection of traffic signs, road markings and/or traffic signals.

9. Driver assistance system according to one of the preceding claims, **characterized in that** the second information is recorded in the form of radar images or photographs of the other road users.

10. Method for steering a vehicle, in particular a higher-level automation vehicle (HAV), comprising the steps of:
• recording information in a vehicle environment;
• determining a vehicle position relative to the vehicle environment;
• providing a database, the database comprising a digital road map; and
• locating the vehicle position on the digital map and ascertaining traffic rules applicable to the vehicle position, the applicable traffic rules being ascertained at least sometimes using first information relating to the vehicle environment and/or using map information stored in the database,
wherein
second information is evaluated to ascertain whether the traffic rules applicable to the vehicle position are being complied with by other road users or whether the other road users are following alternative traffic rules instead of the relevant traffic rules;
wherein
the relevant traffic rules and the alternative traffic rules are in each case right-of-way relationships between the road users, the right-of-way relationship between two road users representing which of the two road users has right of way over the other,
**characterized by** the step of
taking the alternative traffic rules and at least sometimes a flow rate determined using the second information as a basis for granting right of way to at least one other road user, the flow rate representing a number of vehicles (501, 502, 503, 504) passing the vehicle position in a lane (201, 202).

11. Method according to Claim 10, **characterized in that** the evaluation as to whether the traffic rules relevant to the vehicle position are being complied with by the other road users, or whether the other road users are following alternative traffic rules instead of the relevant traffic rules, is carried out by ascertaining target right-of-way relationships between the road users in consideration of the relevant traffic rules and comparing said relationships with de facto actual right-of-way relationships, recorded by the capture device, between the road users.

12. Method according to either of Claims 10 to 11, **characterized in that** a travel trajectory of the vehicle is designed in consideration of the alternative traffic rules and the vehicle is steered along this travel trajectory.

## Revendications

1. Système d'assistance au conducteur pour un véhicule (500), notamment un véhicule hautement automatisé (HAF), comprenant :
un dispositif d'acquisition destiné à acquérir des informations dans un environnement de véhicule ;
un dispositif de détermination de position destiné à déterminer une position du véhicule par rapport à l'environnement de véhicule,
une base de données, la base de données comprenant une carte routière numérique,
une unité de commande, l'unité de commande étant conçue pour localiser la position du véhicule sur la carte numérique et pour déterminer les règles de circulation applicables à la position du véhicule, la détermination des règles de circulation applicables s'effectuant au moins en partie en utilisant des premières informations acquises par le dispositif d'acquisition et/ou en utilisant des informations cartographiques enregistrées dans la base de données ;
l'unité de commande étant en outre conçue pour évaluer des deuxièmes informations acquises par le dispositif d'acquisition afin de déterminer si les règles de circulation pertinentes à la position du véhicule sont respectées par les autres usagers de la route ou si les autres usagers de la route suivent des règles de circulation alternatives au lieu des règles de circulation décisives ; et
le dispositif de commande étant conçu pour concevoir une trajectoire de déplacement en tenant compte des règles de circulation alternatives et pour commander le véhicule (500) le long de cette trajectoire de déplacement
**caractérisé en ce que**
le dispositif de commande est conçu pour accorder la priorité à au moins un autre usager de la route sur la base des règles de circulation alternatives, le dispositif de commande étant conçu pour déterminer un débit à partir des deuxièmes informations, le débit représentant un nombre de véhicules (501, 502, 503, 504) qui passent à la position du véhicule sur une voie de circulation (201, 202), et le dispositif de commande étant conçu pour accorder la priorité à au moins un autre usager de la route au moins en partie sur la base du débit.

2. Système d'assistance au conducteur selon la revendication 1, **caractérisé en ce que** les règles de circulation décisives et les règles de circulation alternatives sont respectivement les relations de priorité entre les usagers de la route, la relation de priorité entre deux usagers de la route reflétant lequel des deux usagers de la route a la priorité sur l'autre.

3. Système d'assistance au conducteur selon la revendication 2, **caractérisé en ce que** le dispositif de commande est conçu pour effectuer l'évaluation si les règles de circulation décisives à la position du véhicule sont respectées par les autres usagers de la route ou si les autres usagers de la route suivent des règles de circulation alternatives à la place des règles de circulation décisives en déterminant les relations de priorité de consigne entre les usagers de la route en tenant compte des règles de circulation décisives et en les comparant aux relations de priorité réelles entre les usagers de la route telles qu'elles ont été acquises par le dispositif d'acquisition.

4. Système d'assistance au conducteur selon la revendication 3, **caractérisé en ce que** le dispositif de commande est conçu pour identifier des règles de circulation alternatives prédéfinies stockées dans une mémoire du dispositif de commande, les règles de circulation alternatives prédéfinies étant notamment des relations de priorité avec lesquelles les usagers de la route se cèdent la priorité en alternance, notamment de préférence selon le procédé dit de la fermeture éclair.

5. Système d'assistance au conducteur selon la revendication 4, **caractérisé en ce que** le dispositif de commande est conçu pour identifier les règles de circulation alternatives à l'aide des écarts qui se produisent régulièrement entre les relations de priorité de consigne et les relations de priorité réelles.

6. Système d'assistance au conducteur selon l'une des revendications précédentes, **caractérisé en ce que** le dispositif de commande est conçu pour développer la trajectoire de conduite sur la base des règles de circulation alternatives comme si le véhicule (500) avait la priorité sur un autre véhicule (501, 502, 503, 504), même si l'autre véhicule (501, 502, 503, 504) a la priorité selon les règles de circulation décisives.

7. Système d'assistance au conducteur selon l'une des revendications 6 à 7, **caractérisé en ce que** le dispositif de commande est conçu pour garantir, avant et pendant la commande le long de la trajectoire de conduite, que l'autre véhicule (501, 502, 503, 504) se comporte conformément aux règles de circulation alternatives sur lesquelles s'appuie la conception de la trajectoire de conduite, notamment **en ce que** le dispositif de commande surveille les deuxièmes informations fournies par le dispositif d'acquisition.

8. Système d'assistance au conducteur selon l'une des revendications précédentes, **caractérisé en ce que** les premières informations sont acquises sous forme d'une détection optique de panneaux de signalisation, de marquages au sol et/ou de feux de signalisation.

9. Système d'assistance au conducteur selon l'une des revendications précédentes, **caractérisé en ce que** les deuxièmes informations sont acquises sous forme de relevés au radar ou de prises de vues des autres usagers de la route.

10. Procédé de commande d'un véhicule, notamment d'un véhicule hautement automatisé (HAF), comprenant les étapes suivantes :
• acquisition d'informations dans un environnement de véhicule ;
• détermination d'une position du véhicule par rapport à l'environnement de véhicule ;
• fourniture d'une base de données, la base de données comprenant une carte routière numérique ; et
• localisation de la position du véhicule sur la carte numérique et détermination des règles de circulation applicables à la position du véhicule, la détermination des règles de circulation applicables s'effectuant au moins en partie en utilisant des premières informations de l'environnement de véhicule et/ou en utilisant des informations cartographiques enregistrées dans la base de données,
des deuxièmes informations étant évaluées afin de déterminer si les règles de circulation décisives à la position du véhicule sont respectées par les autres usagers de la route ou si les autres usagers de la route suivent des règles de circulation alternatives au lieu des règles décisives ;
les règles de circulation décisives et les règles de circulation alternatives étant respectivement les relations de priorité entre les usagers de la route, la relation de priorité entre deux usagers de la route reflétant lequel des deux usagers de la route a la priorité sur l'autre,
**caractérisé par** l'étape,
sur la base des règles de circulation alternatives ainsi qu'au moins en partie sur la base d'un débit déterminé à l'aide des deuxièmes informations, accorder la priorité à au moins un autre usager de la route, le débit représentant un nombre de véhicules (501, 502, 503, 504) qui passent à la position du véhicule sur une voie de circulation (201, 202).

11. Procédé selon la revendication 10, **caractérisé en ce que** l'évaluation si les règles de circulation décisives au niveau de la position du véhicule sont respectées par les autres usagers de la route ou si les autres usagers de la route suivent des règles de circulation alternatives à la place des règles de circulation décisives est effectuée en déterminant les relations de priorité de consigne entre les usagers de la route en tenant compte des règles de circulation décisives et en les comparant aux relations de priorité réelles entre les usagers de la route telles qu'elles ont été acquises par le dispositif d'acquisition.

12. Procédé selon l'une des revendications 10 à 11, **caractérisé en ce qu'**une trajectoire de déplacement du véhicule est conçue en tenant compte des règles de circulation alternatives et que le véhicule est commandé le long de cette trajectoire de déplacement.
